(19) Europäisches Patentamt
European Patent Office
Office européen des brevets

(11) **EP 3 067 837 A1**

(12) **EUROPEAN PATENT APPLICATION**
published in accordance with Art. 153(4) EPC

(43) Date of publication:
**14.09.2016 Bulletin 2016/37**

(51) Int Cl.:
***G06N 5/04*** (2006.01)

(21) Application number: **14860027.3**

(22) Date of filing: **30.09.2014**

(86) International application number:
**PCT/JP2014/004997**

(87) International publication number:
**WO 2015/068330 (14.05.2015 Gazette 2015/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.11.2013   US 201361900085 P**

(71) Applicant: **NEC Corporation
Tokyo 108-8001 (JP)**

(72) Inventors:
• **ETO, Riki
Tokyo 108-8001 (JP)**
• **FUJIMAKI, Ryohei
Tokyo 108-8001 (JP)**
• **TAMANO, Hiroshi
Tokyo 108-8001 (JP)**

(74) Representative: **Betten & Resch
Patent- und Rechtsanwälte PartGmbB
Maximiliansplatz 14
80333 München (DE)**

(54) **MODEL ESTIMATION DEVICE, MODEL ESTIMATION METHOD, AND MODEL ESTIMATION PROGRAM**

(57)   A model estimation device 100 includes a hidden variable variational probability calculation processing unit 104 for acquiring parameters of a hidden variable model and calculating a constrained hidden variable variational probability as a hidden variable posterior probability close to a previously-given distribution by use of the parameters, a model parameter optimization processing unit 105 for optimizing the parameters of the hidden variable model by use of the constrained hidden variable variational probability, and an optimality determination processing unit 106 for determining whether a marginalized log likelihood function using the optimized parameters is converged, wherein when it is determined that the marginalized log likelihood function is converged, the constrained hidden variable variational probability and the parameters used for the marginalized log likelihood function are output.

FIG. 11

**Description**

Technical Field

The present invention relates to a model estimation device for estimating a constrained hidden variable model on multivariate data, a model estimation method, and a model estimation program. In particular, the present invention relates to a model estimation device for estimating a constrained hidden variable model on multivariate data by approximating a model posterior probability and maximizing its lower bound, a model estimation method, and a model estimation program.

Background Art

Data such as sensor data acquired from a vehicle, sales performance of a dealer, and power demand history are accumulated as data of observed values generated by not one factor but various factors. For example, vehicle sensor data changes depending on a traveling mode. The factors causing such data are analyzed so that a user of the analysis results can analyze a vehicle failure cause thereby to achieve a rapid repair, can analyze a correlation between sales and weather/time thereby to decrease shortages or stock, can know a power demand pattern thereby to eliminate excess or deficiency, or can realize an industrially-important applied technique. Additionally, if how a plurality of factors are switched can be analyzed, the user can make a prediction in combination of findings acquired per factor or can use the switching rule as knowledge of the marketing, thereby realizing more-sophisticated applied techniques.

A mixed hidden variable model is typically used on modeling in order to separate the data caused by a plurality of factors per factor, and a hierarchical hidden variable model (see Non-Patent Literature 1, for example) is proposed as a model including the switching rule. The number of hidden states, an observation probability distribution type, and a distribution parameter need to be determined in order to utilize the model. As a method for estimating them, EM algorithm (see Non-Patent Literature 2, for example), variational Bayesian method (see Non-Patent Literature 3, for example), factorized asymptotic Bayesian method (see Non-Patent Literature 4, for example), and the like are proposed.

Citation List

Non Patent Literature

NPL 1: C. Bishop., Svenskn M., "Bayesian hierarchical mixtures of experts", Proceedings of the Nineteenth conference on Uncertainty in Artificial Intelligence, 2002. p57-64

NPL 2: Neal, Radford M., and Geoffrey E. Hinton., "A view of the EM algorithm that justifies incremental, sparse, and other variants.", Learning in graphical models. Springer Netherlands, 1998, p355-368

NPL 3: Beal, M. J.. "variational Algorithms for Approximate Bayesian Inference", PhD thesis, University College London, 2003, p44-81

NPL 4: Ryohei Fujimaki, Satoshi Morinaga: Factorized Asymptotic Bayesian Inference for Mixture Modeling. Proceedings of the fifteenth international conference on Artificial Intelligence and Statistics (AISTATS), 2012.

Summary of Invention

Technical Problem

There is a problem, in a model assuming any structure on a hidden variable like a hierarchical hidden variable model, that if the structure cannot be well estimated, a plurality of estimated patterns cannot be well applied and an accuracy of estimating the entire model is remarkably deteriorated.

It is therefore an object of the present invention to provide a model estimation device capable of estimating a hidden variable model with accuracy, a model estimation method, and a model estimation program.

Solution to Problem

A model estimation device of the present invention includes: a hidden variable variational probability calculation processing unit for acquiring parameters of a hidden variable model and calculating a constrained hidden variable variational probability as a hidden variable posterior probability close to a previously-given distribution by use of the parameters; a model parameter optimization processing unit for optimizing the parameters of the hidden variable model by use of the constrained hidden variable variational probability; and an optimality determination processing unit for determining whether a marginalized log likelihood function using the optimized parameters is converged, wherein when it is determined that the marginalized log likelihood function is not converged, the hidden variable variational probability calculation processing unit recalculates a constrained hidden variable variational probability by use of the optimized parameters, the model parameter optimization processing unit re-optimizes the parameters of the hidden variable model by use of the calculated constrained hidden variable variational probability, and when it is determined that the marginalized log likelihood function is converged, the constrained hidden variable variational probability and the parameters used for the marginalized log likelihood function are output.

A model estimation method of the present invention includes the steps of: acquiring parameters of a hidden variable model and calculating a constrained hidden variable variational probability as a hidden variable posterior probability close to a previously-given distribution by use of the parameters; optimizing the parameters of the hidden variable model by use of the constrained hidden variable variational probability; determining whether a marginalized log likelihood function using the optimized parameters is converged, when it is determined that the marginalized log likelihood function is not converged, recalculating a constrained hidden variable variational probability by use of the optimized parameters, re-optimizing the parameters of the hidden variable model by use of the calculated constrained hidden variable variational probability, and when it is determined that the marginalized log likelihood function is converged, outputting the constrained hidden variable variational probability and the parameters used for the marginalized log likelihood function.

A model estimation program of the present invention is for causing a computer to perform: a hidden variable variational probability calculation processing of acquiring parameters of a hidden variable model and calculating a constrained hidden variable variational probability as a hidden variable posterior probability close to a previously-given distribution by use of the parameters; a model parameter optimization processing of optimizing the parameters of the hidden variable model by use of the constrained hidden variable variational probability; an optimality determination processing of determining whether a marginalized log likelihood function using the optimized parameters is converged, when it is determined that the marginalized log likelihood function is not converged, the hidden variable variational probability calculation processing of recalculating a constrained hidden variable variational probability by use of the optimized parameters, the model parameter optimization processing of re-optimizing the parameters of the hidden variable model by use of the calculated constrained hidden variable variational probability and when it is determined that the marginalized log likelihood function is converged, outputting the constrained hidden variable variational probability and the parameters used for the marginalized log likelihood function.

Advantageous Effects of Invention

According to the present invention, it is possible to estimate a hidden variable model with accuracy.

Brief Description of Drawings

[Fig. 1] It depicts a block diagram illustrating an exemplary structure of a model estimation device according to a first exemplary embodiment of the present invention.
[Fig. 2] It depicts a block diagram illustrating an exemplary structure of a hidden variable variational probability calculation processing unit.
[Fig. 3] It depicts a flowchart illustrating exemplary operations of the model estimation device according to the first exemplary embodiment of the present invention.
[Fig. 4] It depicts a flowchart illustrating exemplary operations of the hidden variable variational probability calculation processing unit according to the first exemplary embodiment.
[Fig. 5] It depicts a block diagram illustrating an exemplary structure of a model estimation device according to a second exemplary embodiment of the present invention.
[Fig. 6] It depicts a block diagram illustrating an exemplary hidden variable variational probability calculation processing unit according to the second exemplary embodiment.
[Fig. 7] It depicts a block diagram illustrating an exemplary gate function optimization processing unit.
[Fig. 8] It depicts a flowchart illustrating exemplary operations of the model estimation device according to the second exemplary embodiment of the present invention.
[Fig. 9] It depicts a flowchart illustrating exemplary operations of the hidden variable variational probability calculation processing unit.
[Fig. 10] It depicts a flowchart illustrating exemplary operations of the gate function optimization processing unit.
[Fig. 11] It depicts a block diagram illustrating a structure of main components in a model estimation device according to the present invention.

Description of Embodiments

A model estimation device for estimating a constrained hidden variable model will be described below. In the following, all the observation variables and all the hidden variables will be collectively represented as X and Z, respectively. Assuming the number of observation samples as N, an observation variable is assumed as $X = (x1, \cdots, xN)$. Assuming the number of hidden states as C, a hidden variable corresponding to an observation variable xn is assumed as $zn = (zn1, \cdots, znC)$ or $Z = (z1 \cdots, zC)$. A probability distribution of an observation variable corresponding to a hidden state c is assumed as $p_c(X|\theta c)$. $\theta$ is a parameter for determining a probability distribution, and when the type of a probability variable and the parameter $\theta$ are determined, its distribution shape is determined. A hidden variable prior distribution is expressed as in Equation (1).

[Mathematical Formula 1]

$$p_z(Z|\Phi) = \prod_{c=1}^{c} p_z(z_c|\Phi) \qquad (1)$$

A marginal distribution of X is assumed as $p(X|\Theta, \Phi)$, and a simultaneous distribution of X and Z is assumed as $p(X, Z|\Theta, \Phi)$. Herein, $\Phi = (\theta1, \theta C)$ is assumed and $\Phi$ is a parameter of a hidden variable prior distribution. A hidden variable variational probability is assumed as $q(Z)$.

According to a first exemplary embodiment in the present specification, the procedures are described assuming that the model estimation device estimates a typical constrained hidden variable model by use of EM algorithm, but even if the model estimation device employs another estimation method such as variational Bayesian method or factorized asymptotic Bayesian method, the similar functions can be easily realized. According to a second exemplary embodiment, the procedures are described assuming that the model estimation device specifically estimates a depth-2 hierarchical hidden variable model by use of factorized asymptotic Bayesian method. A distribution of a target variable X is described in the present specification, but may be applied to a conditional model $p(Y|X)$ (Y is a target probability variable) as when an observation distribution is regressive or discriminant.

First exemplary embodiment

In a model assuming any structure for a hidden variable like a hidden variable model, to take into consideration a structure assumed for a hidden variable is considered remarkably important, but with the techniques described in Non-Patent Literature 1 to Non-Patent Literature 4, the structure of a hidden variable posterior probability is not considered as a constraint when being estimated. Therefore, a posterior probability, which departs from the probabilities for which the structure can be expressed, can be calculated. Consequently, there is a problem that a hidden variable structure cannot be estimated well and an accuracy of estimating the entire model is deteriorated. According to the present exemplary embodiment, there is considered a constraint that a hidden variable posterior probability is close to a distribution when being estimated. Thereby, a posterior probability, for which a hidden variable structure can be easily expressed, can be calculated, thereby consequently enhancing an accuracy of estimating the entire model.

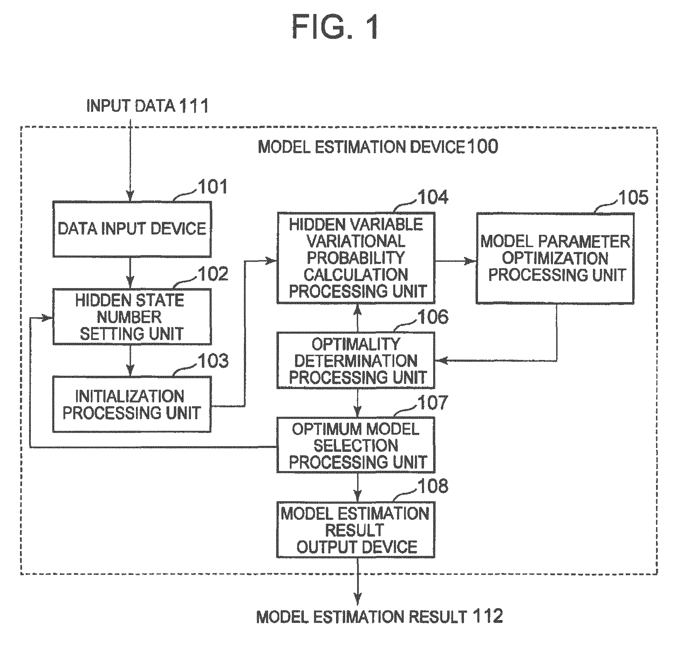

Fig. 1 is a block diagram illustrating an exemplary structure of the model estimation device according to the present exemplary embodiment. As illustrated in Fig. 1, a model estimation device 100 according to the present exemplary embodiment includes a data input device 101, a hidden state number setting unit 102, an initialization processing unit 103, a hidden variable variational probability calculation processing unit 104, a model parameter optimization processing unit 105, an optimality determination processing unit 106, an optimum model selection processing unit 107, and a model estimation result output device 108. The model estimation device 100 acquires input data 111, optimizes a hidden state in the input data 111 and a corresponding model parameter, and outputs a model estimation result 112.

Each component in the structure illustrated in Fig. 1 is realized by an information processing device such as hardware designed to perform a series of specific computation processing, or central processing unit (CPU) operating according to a program. The program is stored in a computer readable non-transitory information storage medium.

The input device 101 is directed for acquiring the input data 111, and simultaneously acquires parameters required to estimate a model at this time. The input data 111 includes candidates of the number of hidden states, an observation probability type (such as normal distribution or Poisson distribution), candidates of the number of components, and the like.

The hidden state number setting unit 102 selects and sets the number of non-optimized hidden states from among the acquired candidate values of the number of hidden states.

The initialization processing unit 103 performs an initialization processing for estimation. The initialization can be performed in any way. By way of example, a model parameter is randomly set or a constrained hidden variable variational probability is randomly set.

The hidden variable variational probability calculation processing unit 104 calculates a constrained hidden variable variational probability by use of the acquired model parameters. The constrained hidden variable variational probability is an approximate value of a hidden variable posterior probability with a constrained structure. The model parameters $\Theta$ and $\Phi$ used for the calculation are the values initialized by the initialization processing unit 103 or the values calculated by the model parameter optimization processing unit 105. The hidden variable variational probability calculation processing unit 104 calculates a lower bound of a marginalized log likelihood function by use of Jensen's inequality, for example. The hidden variable variational probability calculation processing unit 104 calculates a constrained hidden variable variational probability q(Z) which increases the lower bound and approaches a given distribution.

The constrained hidden variable variational probability q(Z) is calculated to approach a given distribution in this way thereby to be a structure-constrained probability. In the following description, a constrained hidden variable variational probability may be simply denoted as variational probability or hidden variable variational probability. Further, a marginalized log likelihood function may be simply denoted as marginalized log likelihood.

A lower bound of a marginalized log likelihood function is specifically expressed as in Equation (2). The hidden variable variational probability calculation processing unit 104 calculates a presence range $Q^{(t)}$ of q(Z) in which the lower bound L(q, $\Theta$, $\Phi$) is increased. t indicates the number of repetitions in the repeated calculations in the hidden variable variational probability calculation processing unit 104, the model parameter optimization processing unit 105, and the optimality determination processing unit 106. That is, $q^{(t)}$ is a variational probability calculated at a t-th time.

[Mathematical Formula 2]

$$\log p(X|\Theta, \Phi) \geq \sum_{Z} q(Z) \log \frac{p(X, Z|\Theta, \Phi)}{q(Z)}$$

$$=: \mathcal{L}(q, \Theta, \Phi) \qquad (2)$$

The hidden variable variational probability calculation processing unit 104 calculates $q^{(t)}(Z)$ in the following procedures, for example. The hidden variable variational probability calculation processing unit 104 calculates an analytical solution $q^{(t)}opt(Z)$ as indicated in Equation (3) based on the fact that a difference between the marginalized log likelihood logp(X|$\Theta$, $\Phi$) and L(q, $\Theta$. $\Phi$) is a KL divergence between q(Z) and the hidden variable posterior probability p(Z|X,$\Theta$, $\Phi$).

[Mathematical Formula 3]

$$q_{opt}^{(t)}(Z) = p(Z|X, \Theta^{(t-1)}, \Phi^{(t-1)}) \qquad (3)$$

A line segment with the end points $q^{(t)}opt(Z)$ and $q^{(t-1)}(Z)$ is part of $Q^{(t)}$. The hidden variable variational probability calculation processing unit 104 then employs, as $q^{(t)}(Z)$, a value for minimizing a distance function D with a distribution $p_{con}$ given from $Q^{(t)}$ as in Equation (4). The given distribution is a hidden variable prior distribution pz(Z|$\Phi$), for example, and D indicates 2 norm, for example.

[Mathematical Formula 4]

$$q^{(t)}(Z) = \arg \min_{\hat{q} \in Q^{(t)}} D(\hat{q}, p_{con}) \qquad (4)$$

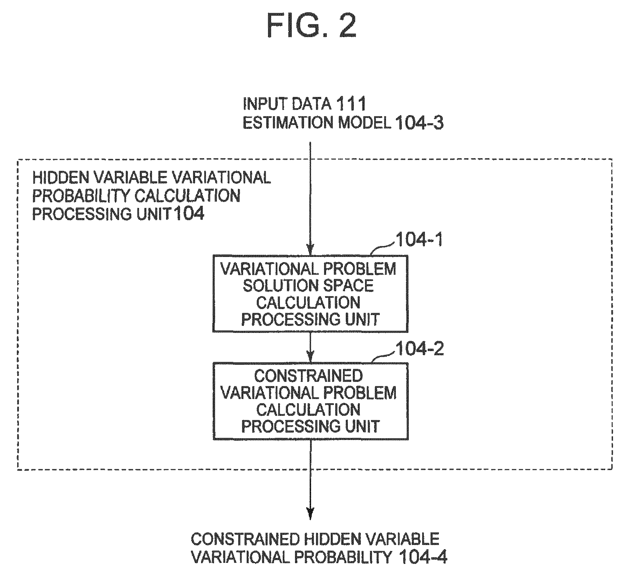

Fig. 2 is a block diagram illustrating an exemplary structure of the hidden variable variational probability calculation processing unit 104. The hidden variable variational probability calculation processing unit 104 may include a variational problem solution space calculation processing unit 104-1 and a constrained variational problem calculation processing unit 104-2 as illustrated in Fig. 2, for example. The hidden variable variational probability calculation processing unit 104 inputs the input data 111 and an estimation model 104-3, and outputs a constrained hidden variable variational probability 104-4.

The series of processing performed by the variational problem solution space calculation processing unit 104-1 and the constrained variational problem calculation processing unit 104-2 will be described when the hidden variable variational probability calculation processing unit 104 is configured as illustrated in Fig. 2. At first, the variational problem solution space calculation processing unit 104-1 acquires the input data 111 and the estimation model 104-3, and calculates the presence range $Q^{(t)}$ of a hidden variable variational probability for increasing the lower bound $L(q, \Theta, \Phi)$ of the marginalized log likelihood. The constrained variational problem calculation processing unit 104-2 then calculates a closest constrained hidden variable variational probability 104-4 ($q^{(t)}(Z)$ to a previously-given distribution $p_{con}$ from $Q^{(t)}$.

The model parameter optimization processing unit 105 optimizes the model parameter $\Theta$ of each component and the parameter $\Phi$ of a hidden variable prior probability by use of the calculated constrained hidden variable variational probability as in Equation (5).

[Mathematical Formula 5]

$$\Theta^{(t)}, \Phi^{(t)} = \arg\max_{\hat{\Theta}, \hat{\Phi}} \sum_{Z} q^{(t-1)}(Z) \log p(X, Z | \hat{\Theta}, \hat{\Phi}) \qquad (5)$$

The optimality determination processing unit 106 determines whether the marginalized log likelihood $\log p(X|\Theta, \Phi)$ using the optimized model parameters calculated in Equation (6) is converged. When it is not converged, the model estimation device 100 repeatedly performs the processing in the hidden variable variational probability calculation processing unit 104, the model parameter optimization processing unit 105, and the optimality determination processing unit 106.

[Mathematical Formula 6]

$$\log p(X | \Theta, \Phi) = \sum_{Z} \prod_{c=1}^{C} p_c(X | \theta_c) p_z(z_c | \Phi) \qquad (6)$$

When the marginalized log likelihood $\log p(X|\Theta, \Phi)$ calculated in the series of processing by the hidden variable variational probability calculation processing unit 104, the model parameter optimization processing unit 105, and the optimality determination processing unit 106 is larger than a currently-set one, the optimum model selection processing unit 107 sets a model indicated by the marginalized log likelihood $\log p(X|\Theta, \Phi)$ as an optimum model. When model optimization for all the candidate values of the number of hidden states C is completed, the processing proceeds to the model estimation result output device 108, and when a non-optimized candidate is present, the processing proceeds to the hidden state number setting unit 102.

The model estimation result output device 108 outputs, as the model estimation result 112, a model estimation result including the optimized hidden variable variational probability and model parameters.

The model estimation device 100 according to the present exemplary embodiment repeatedly performs the series of processing in the hidden variable variational probability calculation processing unit 104, the model parameter optimization processing unit 105, and the optimality determination processing unit 106, and updates the structure-constrained variational probability and the model parameters, thereby selecting an appropriate model. It is ensured that $\log p(X|\Theta, \Phi)$ monotonically increases with the repetition.

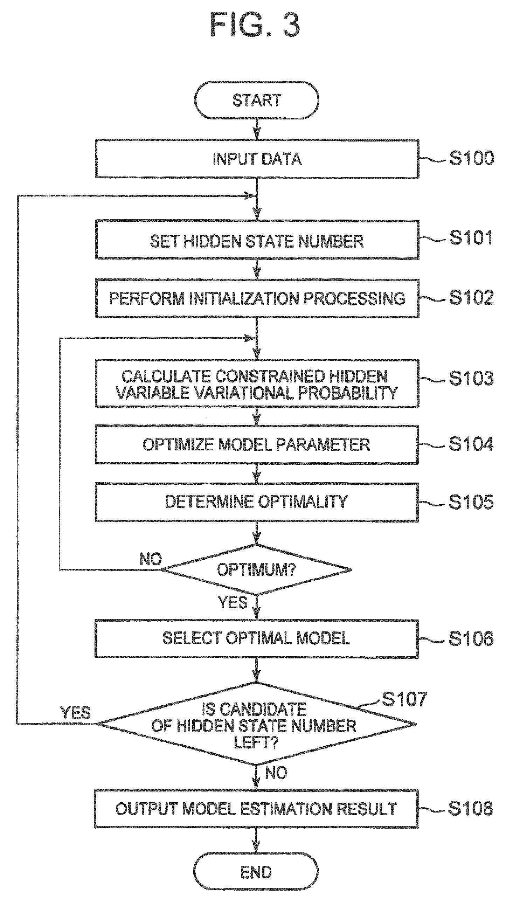

Fig. 3 is a flowchart illustrating the exemplary operations of the model estimation device according to the first exemplary embodiment. The operations of the model estimation device 100 according to the present exemplary embodiment will be schematically described below with reference to Fig. 3.

At first, the data input device 101 inputs the input data 111 (step S100).

Then, the hidden state number setting unit 102 selects and sets the number of non-optimized hidden states from among the acquired candidate values of the number of hidden states (step S101).

The initialization processing unit 103 then performs a processing of initializing a parameter or hidden variable variational probability for estimation on the designated number of hidden states (step S102).

The hidden variable variational probability calculation processing unit 104 then calculates each hidden variable variational probability (step S103).

The model parameter optimization processing unit 105 then estimates a model parameter (step S104).

The optimality determination processing unit 106 then determines whether the marginalized log likelihood $\log p(X|\Theta, \Phi)$ is converged (optimum) (step S105).

When it is determined that the marginalized log likelihood is not converged in step S105, the model estimation device 100 repeatedly performs the series of processing in step S103 to step S105.

When it is determined that the marginalized log likelihood is converged in step S105, the optimum model selection processing unit 107 compares the marginalized log likelihood logp$(X|\Theta, \Phi)$ of the currently-set optimum model with the value of the marginalized log likelihood logp$(X|\Theta, \Phi)$ of the calculated optimum model, and sets a larger value as the optimum model (step S106).

The model estimation device 100 then determines whether a non-estimated candidate of the number of hidden states is left (step S107). When a non-estimated candidate of the number of hidden states is left, the model estimation device 100 repeatedly performs the series of processing in step S101 to step S107.

When a non-estimated candidate of the number of hidden states is not left, the model estimation result output device 108 outputs the model estimation result 112 including the optimized variational probability and the model parameters (step S108).

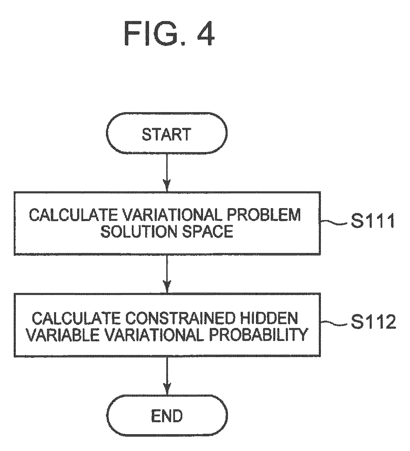

Fig. 4 is a flowchart illustrating the exemplary operations of the hidden variable variational probability calculation processing unit 104. The operations of the hidden variable variational probability calculation processing unit 104 according to the present exemplary embodiment will be schematically described with reference to Fig. 4.

At first, the variational problem solution space calculation processing unit 104-1 calculates a presence range $Q^{(t)}$ of q(Z) for increasing the lower bound L(q, $\Theta$, $\Phi$) of the marginalized log likelihood (step Sill).

The constrained variational problem calculation processing unit 104-2 then calculates a closest constrained hidden variable variational probability $q^{(t)}(Z)$ to the previously-given distribution $p_{con}$ from $Q^{(t)}$ (step S 112).

The model estimation device 100 according to the present exemplary embodiment takes into consideration a constraint that a hidden variable posterior probability (constrained hidden variable variational probability) is close to a distribution when being estimated. Thereby, the model estimation device 100 can calculate a posterior probability for which the structure of a hidden variable can be easily expressed, thereby consequently enhancing an accuracy of estimating the entire model.

Second exemplary embodiment

A model estimation device for estimating a depth-2 hierarchical hidden variable model by the factorized Bayesian method will be described according to a second exemplary embodiment. A hierarchical hidden variable model according to the present exemplary embodiment is such that a hidden variable has a hierarchical hidden structure (in particular, tree structure). A component as a probability model is arranged to a node in the lowermost layer in the tree structure, and a gate function for dividing the branches depending on input is provided at each branch node. A depth-2 hierarchical hidden variable model will be specifically described below. The following description assumes that a data string $X^n$ (n = 1, ···, N) is input and each $x^n$ is an M-dimension multivariate data string $x^n = ((x_1)^n, ···, (x_M)^n)$.

Then, a first layer branch hidden variable $(Z_1)^n$, a lowermost layer branch hidden variable $(z_{j|i})^n$, and a lowermost layer path hidden variable $(Z_{ji})^n$ for an observation variable $x^n$ are defined. $(z_i)^n = 1$ indicates that $x^n$ in the root node is branched into a first layer i-th node, and $(x_i)^n = 0$ indicates that it is not. $(z_{j|i})^n = 1$ indicates that $x^n$ in the first layer i-th node is branched into a second layer j-th node, and $(z_{j|i})n = 0$ indicates that it is not. Further, $(z_{ij})^n = 1$ indicates that the observation variable $x^n$ corresponds to a component routed through the first layer i-th node and the second layer j-th node, and $(z_{ij})^n = 0$ indicates that it does not. $\Sigma_i(z_i)^n = 1$, $\Sigma_j(z_{j|i})^n = 1$, and $(z_{ij})^n = (z_i)^n(z_{j|i})^n$ are assumed so that $(z_i)^n = \Sigma_j(z_{ij})^n$ is established. A combination of x and a representative value z of the lowermost layer path hidden variable is called "perfect variable," (x is called imperfect variable in contrast), and a depth-2 hierarchical hidden variable model simultaneous distribution for the perfect variable is defined as P(x, z) = P(x, $z_{1st}$, $z_{2nd}$) in Equation (7).

[Mathematical Formula 7]

$$p(x^N, z^N|M) = p(x^N, z_{1st}^N, z_{2nd}^N|M)$$
$$= \int \prod_{n=1}^{N} \left\{ p(z_{1st}^n|\beta) \prod_{i=1}^{K_1} p(z_{2nd|i}^n|\beta_i)^{z_i^n} \prod_{i=1}^{K_1}\prod_{j=1}^{K_2} p(x^n|\phi_{ij})^{z_i^n \cdot z_{j|i}^n} \right\} d\theta \quad (7)$$

In Equation (7), a representative value of $(z_i)^n$ is assumed as $(z_{1st}^n)$ and a representative value of $(z_{j|i})^n$ is assumed as $(z_{2nd})^n$. A variational probability of the first layer branch hidden variable $(z_i)^n$ is assumed as $q(z_i)^n$ and a variational probability of the lowermost layer path hidden variable $(z_{ij})^n$ is assumed as $q(z_{ij}^n)$. In Equation (7), $K_1$ indicates the number of nodes in the first layer, $K_2$ indicates the number of nodes branched from the node in the first layer, and the components in the lowermost layer are expressed in $K_1.K_2$. $\theta = (\beta, \beta1, ..., \beta K_1, \Phi1, ..., \Phi K_1 \cdot K_2)$ indicates a model parameter ($\beta$ indicates a branch parameter in the root node, $\beta k$ indicates a branch parameter in a first layer k-th node, and $\phi k$ is an observation parameter of a k-th component), and S1, ..., $SK_1 \cdot K_2$ indicates a type of the observation probability corresponding to $\phi k$. The candidates of the observation probability which may be S1 to $SK_1 \cdot K_2$ may be {normal distribution, log normal distribution, exponential distribution} in the case of a multivariate data generation probability, or {zero-dimensional curve, primary curve, quadric curve, cubic curve} in the case of multiple curve output.

The following specific examples will describe a depth-2 hierarchical hidden variable model, and Equations (7) to (15) are derived in the same procedures also for the depth-1 or depth-3 or more hierarchical hidden variable model and the structure can be easily configured in the same way. Similarly, the description in the present specification is made on a distribution with a target variable X, and the distribution is applicable to a conditional model P(Y|X) (Y is a target probability variable) similarly as the observation distribution is regressive or discriminant.

When the constraint that a multi-step gate function can be easily expressed is not considered when a hierarchical hidden variable posterior probability is estimated, there arise a problem that an accuracy of estimating the gate function is deteriorated. In order to solve the problem, like the model estimation device according to the present exemplary embodiment, a hierarchical hidden variable posterior probability needs to be estimated under the constraint that it can be easily expressed by the gate function.

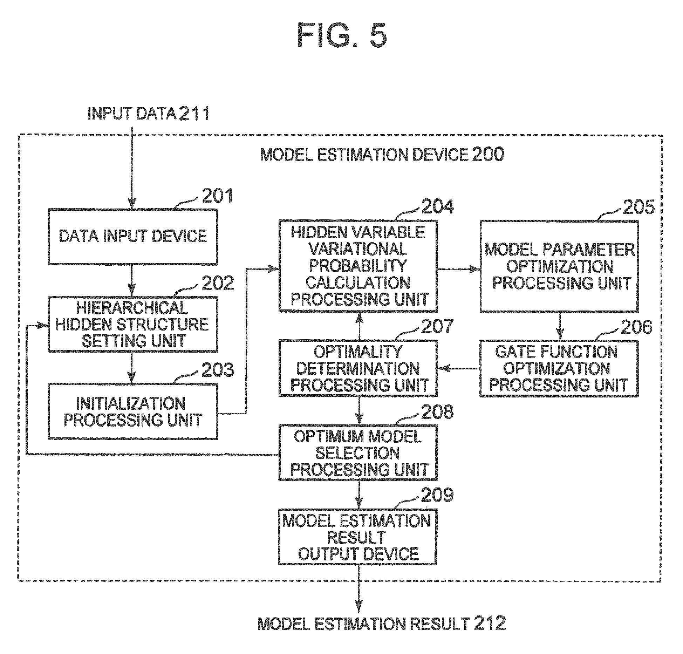

Fig. 5 is a block diagram illustrating an exemplary structure of a model estimation device 200 according to the second exemplary embodiment. As illustrated in Fig. 5, the model estimation device 200 according to the present exemplary embodiment includes a data input device 201, a hierarchical hidden structure setting unit 202, an initialization processing unit 203, a hidden variable variational probability calculation processing unit 204, a model parameter optimization processing unit 205, a gate function optimization processing unit 206, an optimality determination processing unit 207, an optimum model selection processing unit 208, and a model estimation result output device 209. The model estimation device 200 inputs input data 211, optimizes a hierarchical hidden structure and an observation probability type for the input data 211, and outputs a model estimation result 212.

The input device 201 acquires the input data 211. The input data 211 includes the parameters required for estimating a model, such as observation probability type, candidates of the number of components, and candidate values of a hierarchical hidden structure indicating a hidden variable.

The hierarchical hidden structure setting unit 202 selects and sets a non-optimized hierarchical hidden structure to be calculated from among the acquired candidate values of the hierarchical hidden structure. The hidden structure according to the present exemplary embodiment is a tree structure. In the following, the number of set components is denoted as C, and the equations used for the description are directed for a depth-2 hierarchical hidden variable model.

The initialization processing unit 203 performs an initialization processing for estimation. The initialization can be performed in any way. For example, the initialization processing unit 203 randomly sets an observation probability type per component, and randomly sets a parameter of each observation probability according to the set type. Further, for example, the initialization processing unit 203 may randomly set a lowermost layer path variational probability of the hierarchical hidden variable.

The hidden variable variational probability calculation processing unit 204 calculates a path hidden variable variational probability per hierarchy The hidden variable variational probability calculation processing unit 204 uses, as the parameter θ, a value calculated by the initialization processing unit 203 or the model parameter optimization processing unit 205 and the gate function optimization processing unit 206. The hidden variable variational probability calculation processing unit 204 performs Laplace approximation on a marginalized log likelihood function for the amount of estimation for a perfect variable (such as the amount of maximum likelihood estimation or the amount of maximum posterior probability estimation), increases its lower bound, and calculates a variational probability to approach a given distribution. A lower bound value to be increased will be called optimization reference A hereinafter.

The procedures will be described by way of a depth-2 hierarchical hidden variable model. It is assumed herein that the superscript (t) indicates a (t)-th repetition in the repeated calculations in the hidden variable variational probability calculation processing unit 204, the model parameter optimization processing unit 205, the gate function optimization processing unit 206, and the optimality determination processing unit 207. q", q' and θ are defined as in the following Equations (8-1) to (8-3).

[Mathematical Formula 8]

$$q'' = q^{(t-1)} \qquad (8-1)$$

$$q' = \sum_{j=1}^{K_2} q^{(t)} \qquad (8-2)$$

$$\theta = \theta^{(t-1)} \qquad (8-3)$$

A lower bound indicated in Equation (9) for marginalized log likelihood will be first described. In Equation (9), equality is established when the lowermost layer path hidden variable variational probability $q(z^N)$ is maximized. The hidden variable variational probability calculation processing unit 204 performs Laplace approximation on a marginalized likelihood of a perfect variable in the numerator by use of the amount of maximum likelihood estimation for the perfect variable thereby to acquire Equation (10) as an approximation equation of the marginalized log likelihood function. The superscript bar indicates the amount of maximum likelihood estimation for the perfect variable, and D* indicates a dimension of a parameter *.

[Mathematical Formula 9]

$$\log p(x^N | M) \geq \sum_{z^N} q(z^N) \log \left\{ \frac{p(x^N, z^N | M)}{q(z^N)} \right\} \qquad (9)$$

[Mathematical Formula 10]

$$\mathcal{J}(q, \bar{\theta}, x^N) = \sum_{z^N} q(z^N) \Big\{ \log p(x^N, z^N | \bar{\theta}) - \frac{D_\beta}{2} \log N$$

$$- \sum_{i=1}^{K_1} \frac{D_{\beta_i}}{2} \log \left( \sum_{n=1}^{N} \sum_{j=1}^{K_2} z_{ij}^n \right)$$

$$- \sum_{i=1}^{K_1} \sum_{j=1}^{K_2} \frac{D_{\phi_{ij}}}{2} \log \left( \sum_{n=1}^{N} z_{ij}^n \right) - \log q(z^N) \Big\} \qquad (10)$$

Then, a lower bound in Equation (10) is calculated as in Equation (11) by use of the nature that the amount of maximum likelihood estimation maximizes the log likelihood function for Equation (10) and the fact that the log function is a concave unction.

[Mathematical Formula 11]

$$\mathcal{G}(q, q', q'', \theta, x^N) = \sum_{z^N} q(z^N) \Big[ \log p(x^N, z^N | \bar{\theta}) - \frac{D_\beta}{2} \log N$$

$$- \sum_{i=1}^{K_1} \frac{D_{\beta_i}}{2} \left\{ \log \left( \sum_{n=1}^{N} q'(z_i^n) \right) + \frac{\sum_{n=1}^{N} \sum_{j=1}^{K_2} z_{ij}^n}{\sum_{n=1}^{N} q'(z_i^n)} - 1 \right\}$$

$$- \sum_{i=1}^{K_1} \sum_{j=1}^{K_2} \frac{D_{\phi_{ij}}}{2} \left\{ \log \left( \sum_{n=1}^{N} q''(z_{ij}^n) \right) + \frac{\sum_{n=1}^{N} z_{ij}^n}{\sum_{n=1}^{N} q''(z_{ij}^n)} - 1 \right\}$$

$$- \log q(z^N) \Big] \qquad (11)$$

The hidden variable variational probability calculation processing unit 204 then finds a set $Q^{(t)}$ of lowermost layer path hidden variable variational probabilities $qz^N$ for increasing Equation (11), and employs an element for minimizing the distance function D relative to the given distribution $p_{con}$ as q(t) from among the elements contained in the set. The hidden variable variational probability calculation processing unit 204 can calculate an analytical solution $q_{opt}^{(t)}$ of the variational problem for maximizing Equation (11) for $qz^N$, for example, and can find $Q^{(t)}$ as a line segment with the end points $q_{opt}^{(t)}$ and $q^{(t-1)}$.

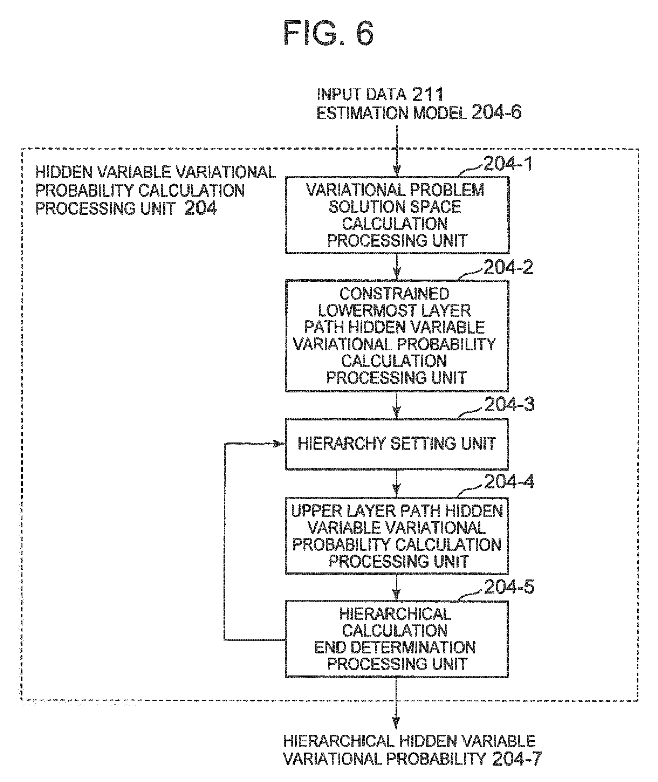

Fig. 6 is a block diagram illustrating the hidden variable variational probability calculation processing unit 204 by way of example. As illustrated in Fig. 6, the hidden variable variational probability calculation processing unit 204 includes a variational problem solution space calculation processing unit 204-1, a constrained lowermost layer path hidden variable variational probability calculation processing unit 204-2, a hierarchy setting unit 204-3, an upper layer path hidden variable variational probability calculation processing unit 204-4, and a hierarchical calculation end determination processing unit 204-5, for example. The hidden variable variational probability calculation processing unit 204 inputs the input data 211 and an estimation model 204-6 which is a hidden variable model of the parameters estimated by the model parameter optimization processing unit 205 (the parameters initialized by the initialization processing unit 203 in the first processing), and outputs a hierarchical hidden variable variational probability 204-7.

At first, the variational problem solution space calculation processing unit 204-1 inputs the input data 211 and the estimation model 204-6 thereby to calculate a presence range $Q^{(t)}$ of the lowermost layer path hidden variable variational probability for increasing the optimization reference A.

The constrained lowermost layer path hidden variable variational probability calculation processing unit 204-2 uses an element closest to the given distribution $p_{con}$ from among $Q^{(t)}$ as an updated value of the lowermost layer hidden variable variational probability.

The hierarchy setting unit 204-3 then sets a layer used for calculating a path hidden variable variational probability. The hierarchy setting unit 204-3 specifically sets, as a layer to be calculated, one layer above the immediately-previous layer to be calculated.

The upper layer path hidden variable variational probability calculation processing unit 204-4 takes a sum of the lowermost layer hidden variable variational probabilities in the currently-set layer having the same branch node as parent, and assumes it as a path hidden variable variational probability of one layer above.

The hierarchical calculation end determination processing unit 204-5 then confirms whether there is a layer for which a path hidden variable variational probability is not calculated, and confirms whether to terminate the calculation. Specifically, the hierarchical calculation end determination processing unit 204-5 confirms whether there is one layer above the layer for which the path hidden variable variational probability is calculated immediately before. When the layer is present, the hierarchy setting unit 204-3 sets one layer above. The series of processing in the upper layer path hidden variable variational probability calculation processing unit 204-4 and the hierarchical calculation end determination processing unit 204-5 are repeatedly performed. When there is not one layer above the current layer to be calculated, the hierarchical calculation end determination processing unit 204-5 determines that the path hidden variable variational probabilities are calculated for all the hierarchies.

The model parameter optimization processing unit 205 optimizes a model (parameter $\theta$ and its type S) of each component for Equation (11). For a depth-2 hierarchical hidden variable model, the model parameter optimization processing unit 205 fixes Equation (11) at the lowermost layer path hidden variable variational probability $q^{(t)}$ for which q and q", q' are calculated by the hierarchical hidden variable variational probability calculation unit 204, and the upper layer path hidden variable variational probability indicated in Equation (12), and calculates a model for maximizing g.

[Mathematical Formula 12]

$$\sum_{j=1}^{K_2} q^{(t)} \qquad (12)$$

What is important, in the processing, is that the optimization function can be decomposed per component in terms of g defined in Equation (11) so that S1 and the parameter $\phi 1$ can be separately optimized into $SK_1'K_2$ and $\phi K_1 \cdot K_2$, respectively, without considering a combination of component types (which type is designated from S1 into $SK_1 \cdot SK_2$). Thereby, when the component types are to be optimized, the optimization can be performed by avoiding a combination explosion.

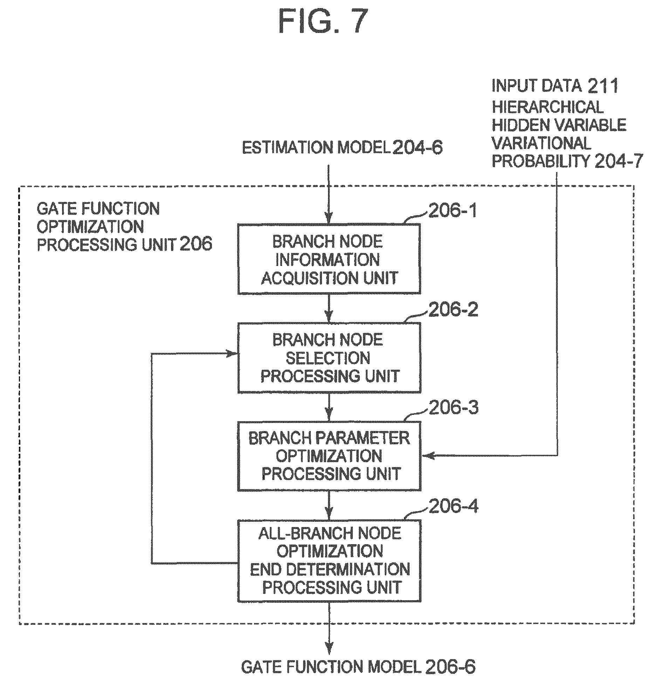

Fig. 7 is a block diagram illustrating the gate function optimization processing unit 206 by way of example. The gate function optimization processing unit 206 includes a branch node information acquisition unit 206-1, a branch node selection processing unit 206-2, a branch parameter optimization processing unit 206-3, and an all-branch node optimization end determination processing unit 206-4. The gate function optimization processing unit 206 inputs the input data 211, a hierarchical hidden variable variational probability 204-7 calculated in the hidden variable variational probability calculation processing unit 204, and the estimation model 204-6 by the parameters estimated by the model parameter optimization processing unit 205 (the parameters initialized by the initialization processing unit 203 in the first processing), and outputs a gate function model 206-6.

At first, the branch node information acquisition unit 206-1 grasps all the branch nodes by acquiring the information on the branch nodes in the estimation model 204-6 as a hidden variable model of the parameters optimized by the model parameter optimization processing unit 205. The branch node selection processing unit 206-2 selects one branch node to be optimized from among the branch nodes. The branch parameter optimization processing unit 206-3 then optimizes the branch parameters in the selected node by use of the input data 211, and the hidden variable variational probability for the selection node acquired from the hierarchical hidden variable variational probability 204-7.

The all-branch node optimization end determination processing unit 206-4 then determines whether all the branch nodes acquired by the branch node information acquisition unit are optimized. When all the branch nodes are optimized, the gate function optimization processing unit 206 terminates the processing, and when all the branch nodes are not optimized, the processing proceeds to the branch node selection processing unit 206-2.

A specific example of the gate function will be described based on Bernoulli distribution for a two-branched tree's hierarchical model. Assuming a d-dimension of x as $X_d$, when the value does not exceed a threshold w, a probability toward the lower left of the two-branched tree is assumed as $g^-$, and when it exceeds the threshold w, a probability toward the lower left of the two-branched tree is assumed as $g^+$. The branch parameter optimization processing unit 206-3 optimizes the optimization parameters d. w, $g^-$, and $g^+$ based on the Bernoulli distribution.

The optimality determination processing unit 207 determines whether the optimization reference A calculated in Equation (11) is converged. When it is not converged, the model estimation device 200 repeatedly performs the series of processing from the hidden variable variational probability calculation processing unit 204 to the optimality determination processing unit 207.

The series of processing from the hidden variable variational probability calculation processing unit 204 to the optimality determination processing unit 207 are repeatedly performed to update the variational probability and the model, thereby selecting an appropriate model. It is ensured that the optimization reference A monotonically increases with the repetition.

When the optimization reference A calculated in the series of processing from the hidden variable variational probability calculation processing unit 204 to the optimality determination processing unit 207 is higher than the currently-set optimization reference A, the optimum model selection processing unit 208 sets the model as an optimum model. When the model is completely optimized for all the candidate values, the processing proceeds to the model estimation result output device 209. When a non-optimized candidate is present, the processing proceeds to the hierarchical hidden structure setting unit 202. In this case, the hierarchical hidden structure setting unit 202 sets a new hierarchical hidden variable model structure.

The model estimation result output device 209 outputs the number of optimum hidden states, observation probability type, parameters, variational probability, and the like as the model estimation result 212.

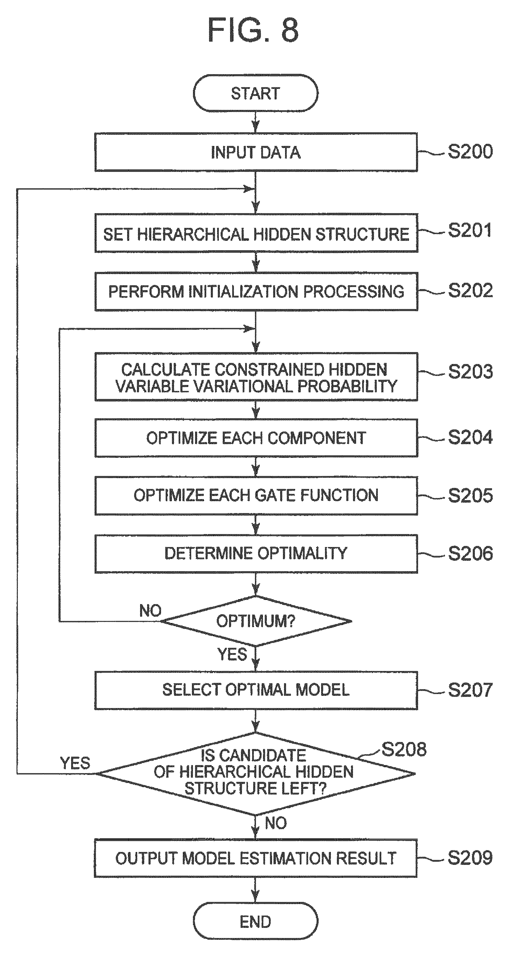

Fig. 8 is a flowchart illustrating the exemplary operations of the model estimation device according to the present exemplary embodiment. The operations of the model estimation device 200 according to the present exemplary embodiment will be described with reference to Fig. 8.

At first, the data input device 201 acquires the input data 211 (step S200).

The hierarchical hidden structure setting unit 202 then selects and sets a non-optimized hierarchical hidden structure from among the acquired candidate values of the hierarchical hidden structure (step S201).

The initialization processing unit 203 then performs a processing of initializing a parameter or hidden variable variational probability for estimation on the designated hierarchical hidden structure (step S202).

The hidden variable variational probability calculation processing unit 204 then calculates a path hidden variable variational probability per hierarchy (step S203).

The model parameter optimization processing unit 205 then optimizes an observation probability type and a parameter for each component (step S204).

The gate function optimization processing unit 206 then optimizes each gate function (step S205). That is, the gate function optimization processing unit 206 optimizes a branch parameter in each branch node.

The optimality determination processing unit 207 then determines whether the optimization reference A is converged (step S206).

When it is determined that the optimization reference A is not converged in step S206, the model estimation device 200 repeatedly performs the series of processing in step S203 to step S206.

When it is determined that the optimization reference A is converged in step S206, the optimum model selection processing unit 208 compares the optimization reference A in the currently-set optimum model (the number of components, the observation probability type, the parameters which are currently set) with the value of the optimum reference A of the currently-set optimum model, and sets the model for which the value of the optimization reference A is higher as an optimum model (step S207).

The model estimation device 200 then determines whether a non-estimated candidate of the hierarchical hidden structure is left (step S208). When the candidate is left, the model estimation device 200 repeatedly performs the series of processing in step S201 to step S208. When the candidate is not left, a model estimation result is output to complete the processing (step S209).

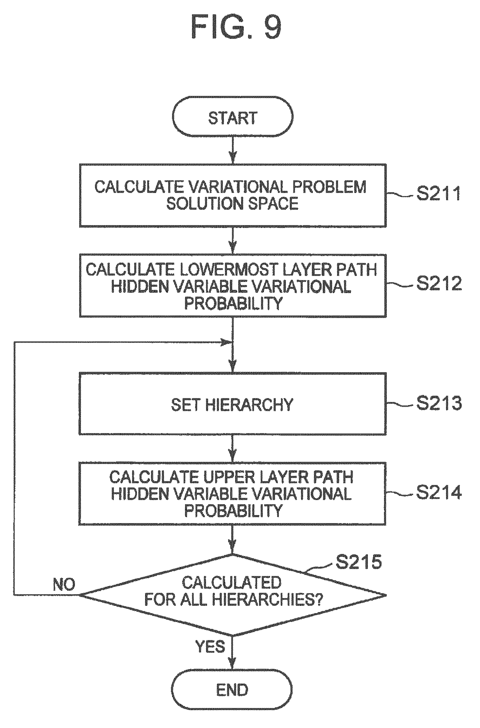

Fig. 9 is a flowchart illustrating the exemplary operations of the hidden variable variational probability calculation processing unit 204. The operations of the hidden variable variational probability calculation processing unit 204 according to the present exemplary embodiment will be described below with reference to Fig. 9.

At first, the variational problem solution space calculation processing unit 204-1 calculates a presence range of the lowermost layer path hidden variable variational probability for increasing the optimization reference A (step S211).

Then, the constrained lowermost layer path hidden variable variational probability calculation processing unit 204-2 calculates a presence range of the hidden variable variational probability for increasing the optimization reference A, and sets a closest constrained lowermost layer path hidden variable variational probability to the given distribution

$p_{con}$ (step S212).

The hierarchy setting unit 204-3 then sets a hierarchy used for calculating a path hidden variable variational probability (step S213).

The upper layer path hidden variable variational probability calculation processing unit 204-4 then calculates a path hidden variable variational probability in one layer above by use of the path hidden variable variational probability in the set hierarchy (step S214).

The hierarchical calculation end determination processing unit 204-5 then determines whether a hierarchy for which a path hidden variable is not calculated is left (step S215).

When a hierarchy for which a path hidden variable is not calculated is left, the hidden variable variational probability calculation processing unit 204 repeatedly performs the series of processing in step S213 to step S215. When the hierarchy is not left, the processing is completed.

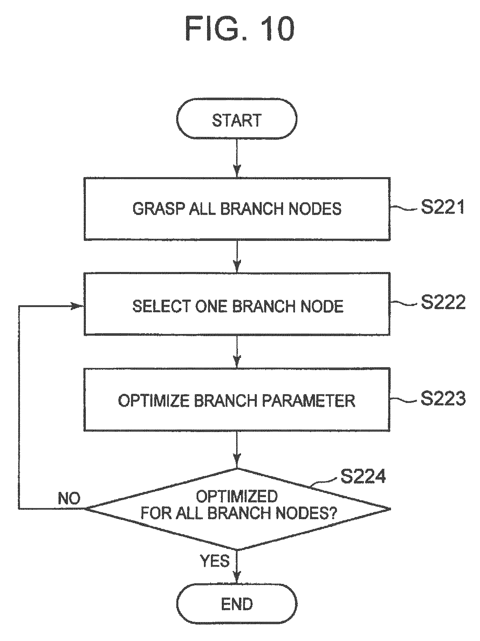

Fig. 10 is a flowchart illustrating the exemplary operations of the gate function optimization processing unit 206. The gate function optimization processing unit 206 according to the present exemplary embodiment schematically operate as follows with reference to Fig. 10.

At first, the branch node information acquisition unit 206-1 grasps all the branch nodes (step S221).

The branch node selection processing unit 206-2 then sets a branch node to be optimized (step S222).

The branch parameter optimization processing unit 206-3 then optimizes a branch parameter in the selected branch node (step S223).

The all-branch node optimization end determination processing unit 206-4 then determines whether a non-optimized branch node is left (step S224). When the branch node is left, the gate function optimization processing unit 206 repeatedly performs the series of processing in step S222 to step S224. When the branch node is not left, the gate function optimization processing unit 206 completes the processing.

The model estimation device 200 according to the present exemplary embodiment takes into consideration a constraint that a hidden variable posterior probability (constrained hidden variable variational probability) is close to a distribution when being estimated (calculated) as the model estimation device according to the first exemplary embodiment. Further, when calculating a constrained hidden variable variational probability by the gate function optimization processing unit 206, the model estimation device 200 takes into consideration a constraint that a multi-step gate function can be easily expressed. Thereby the model estimation device 200 can calculate a posterior probability for which a hidden variable structure can be easily expressed, thereby consequently enhancing an accuracy of estimating the entire model.

(Example)

An exemplary application of the model estimation device 200 according to the present exemplary embodiment will be described by way of demand history analysis of power in a building.

The model estimation device 200 according to the present exemplary embodiment can decompose a relationship between multivariate data and consumed power acquired from a plurality of sensors installed in a building depending on a plurality of different situations such as "weekdays and holidays." Further, the model estimation device 200 can estimate a switching rule of the acquired relationships, such as transition to a specific relationship at a certain temperature or more.

When consumed power prediction is considered for eliminating excess and deficiency of supplied power, it is remarkably important to estimate a plurality of relationships and to estimate how to switch the relationships. For example, assuming temperature, time zone and day as explanatory variables and assuming a multiple regression expression with the amount of consumed power in one hour as a target variable, a hierarchical hidden variable model using them at each component will be considered. At this time, a model to be estimated is a hierarchical hidden structure, a regression parameter ($\phi k$), or a lowermost layer path hidden variable variational distribution (q).

At first, the data input device 201 acquires a plurality of items of information on different hierarchical structures (tree structures) as candidates of the hierarchical hidden structure together with the explanatory variables and the target variable data. The initialization processing unit 203 sequentially sets the acquired tree structures. The initialization processing unit 203 then randomly sets a regression order and other parameters for the set hierarchical hidden structure in the initialization processing. The hidden variable variational probability calculation processing unit 204, the model parameter optimization processing unit 205, the gate function optimization processing unit 206, and the optimality determination processing unit 207 then estimate a model.

The model estimation device 200 according to the present exemplary embodiment can automatically acquire a plurality of regression models expressing different situations and their switching rule, such as a larger regression coefficient of an explanatory variable expressing a check-in time of around 9:00 or a relatively smaller regression coefficient of a parameter expressing a time zone. Further, the optimum model selection processing unit 208 automatically selects the best hierarchical hidden structure, and thus the model estimation device 200 can automatically detect the number of different patterns of consumed power depending on a building, for example, and can model an appropriate number of relationships and their switching rule.

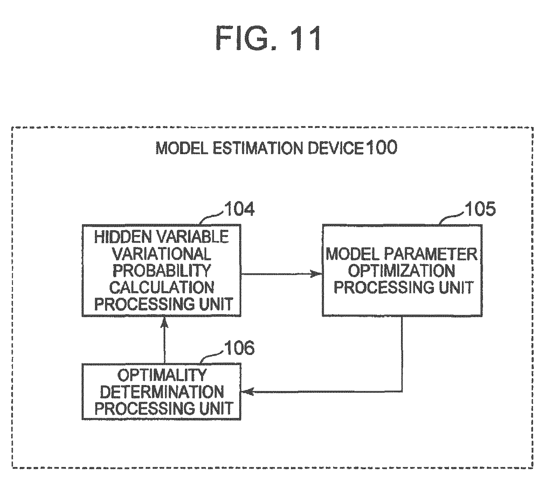

Fig. 11 is a block diagram illustrating a structure of main component in a model estimation device according to the present invention. As illustrated in Fig. 11, the model device according to the present invention includes the hidden variable variational probability calculation processing unit 104 for acquiring parameters in a hidden variable model as main components and calculating a constrained hidden variable variational probability as a hidden variable posterior probability close to a previously-given distribution by use of the parameters, the model parameter optimization processing unit 105 for optimizing the parameters of the hidden variable model by use of the constrained hidden variable variational probability, and the optimality determination processing unit 106 for determining whether a marginalized log likelihood function using the optimized parameters is converged, wherein when it is determined that the marginalized log likelihood function is not converged, the hidden variable variational probability calculation processing unit 104 recalculates a constrained hidden variable variational probability by use of the optimized parameters, and the model parameter optimization processing unit 105 re-optimizes the parameters of the hidden variable model by use of the calculated constrained hidden variable variational probability, and when it is determined that the marginalized log likelihood function is converged, the constrained hidden variable variational probability and the parameters used for the marginalized log likelihood function are output.

The model estimation devices (1) to (6) described hereinafter are disclosed for the model estimation device according to the present exemplary embodiment.

(1) A model estimation device, wherein the hidden variable variational probability calculation processing unit (the hidden variable variational probability calculation processing unit 104, for example) includes a variational problem solution space calculation processing unit (the variational problem solution space calculation processing unit 104-1, for example) for calculating a presence range of a constrained hidden variable variational probability for increasing a lower bound of a marginalized log likelihood function, and a constrained variational problem calculation processing unit (the constrained variational problem calculation processing unit 104-2, for example) for calculating a constrained hidden variable variational probability close to a previously-given distribution from the presence range.

(2) A model estimation device including an input device (the input device 101, for example) for acquiring candidates of the number of hidden states in a hidden variable model, and parameters of the hidden variable, a hidden state number setting unit (the hidden state number setting unit 102, for example) for selecting and setting the number of hidden states from among the acquired candidates of the number of hidden states, an initialization processing unit (the initialization processing unit 103, for example) for initializing the parameters and a constrained hidden variable variational probability, an optimum model selection processing unit (the optimum model selection processing unit 107, for example) for, when a marginalized log likelihood function based on the parameters optimized by the model parameter optimization processing unit is larger than a currently-set marginalized log likelihood function, setting a model indicated by the larger marginalized log likelihood function as an optimum model, and a model estimation result output device (the model estimation result output device 108, for example) for outputting a model estimation result including a constrained hidden variable variational probability and parameters of the optimum model, wherein when a non-optimized candidate of the number of hidden states is present, the hidden state number setting unit sets the non-optimized candidate of the number of hidden states as the number of hidden states, the initialization processing unit re-initializes the parameters and the constrained hidden variable variational probability, the hidden variable variational probability calculation processing unit recalculates a constrained hidden variable variational probability, the model parameter optimization processing unit re-optimizes the parameters of the hidden variable model, and the optimality determination processing unit re-determines whether the marginalized log likelihood function is converged.

(3) A model estimation device including a gate function optimization processing unit (the gate function optimization processing unit 206, for example) for optimizing parameters of a branch node in a hierarchical hidden structure expressing a hidden variable and having a plurality of hierarchies, wherein the hidden variable variational probability calculation processing unit (the hidden variable variational probability calculation processing unit 204, for example) calculates a path hidden variable variational probability as a path hidden variable variational probability indicating a correspondence between an observation variable and a component configuring a hidden variable model per hierarchy, the model parameter optimization processing unit (the model parameter optimization processing unit 205, for example) acquires an observation probability type of the hidden variable model, and optimizes the parameters and the observation probability type of each component in the hidden variable model, and the optimality determination processing unit (the optimality determination processing unit 207, for example) determines whether an optimization reference as a lower bound of a marginalized log likelihood function using the optimized parameters and the observation probability type is converged.

(4) A model estimation device, wherein the hidden variable variational probability calculation processing unit (the hidden variable variational probability calculation processing unit 204, for example) includes a variational problem solution space calculation processing unit (the variational problem solution space calculation processing unit 204-1, for example) for calculating a presence range of a lowermost layer path hidden variable variational probability for increasing an optimization reference, a constrained lowermost layer path hidden variable variational probability calculation processing unit (the constrained lowermost layer path hidden variable variational probability calculation processing unit 204-2, for example) for assuming a closest probability to a previously-given distribution from among the presence range of the lowermost layer path hidden variable variational probability as an updated value of the lowermost layer path hidden variable variational probability, a hierarchy setting unit (the hierarchy setting unit 204-3, for example) for setting one layer above a immediately-lower layer to be calculate as a layer to be calculated, an upper layer path hidden variable variational probability calculation processing unit (the upper layer path hidden variable variational probability calculation processing unit 204-4, for example) for taking a sum of the lowermost layer constrained hidden variable variational probabilities that the layer has a same branch nodes as a parent node and the layer is in a current layer to be calculated, and assuming it as a path hidden variable variational probability in one layer above, and a hierarchical calculation end determination processing unit (the hierarchical calculation end determination processing unit 204-5, for example) for confirming whether there is a layer for which the path hidden variable variational probability is not completely calculated, and confirming whether to terminate the calculation.

(5) A model estimation device, wherein the gate function optimization processing unit (the gate unction optimization processing unit 206, for example) includes a branch node information acquisition unit (the branch node information acquisition unit 206-1, for example) for acquiring information on branch nodes in a hidden variable model of optimized parameters, a branch node selection processing unit (the branch node selection processing unit 206-2, for example) for selecting a branch node to be optimized from among the acquired branch nodes, a branch parameter optimization processing unit (the branch parameter optimization processing unit 206-3, for example) for optimizing a branch parameter in the selected branch node by use of a path hidden variable variational probability calculated by the hidden variable variational probability calculation processing unit, and an all-branch node optimization end determination processing unit (the all-branch node optimization end determination processing unit 206-4, for example) for determining whether all the acquired branch nodes are optimized.

(6) A model estimation device including an input device (the input device 201, for example) for acquiring parameters of a hidden variable model including candidates of a hierarchical hidden structure indicating a hidden variable, an observation probability type, and candidates of the number of components, a hierarchical hidden structure setting unit (the hierarchical hidden structure setting unit 202, for example) for selecting and setting one candidate of the candidates of the hierarchical hidden structure, an initialization processing unit (the initialization processing unit 203, for example) for initializing the observation probability type, parameters of the observation probability, a hidden variable, and a lowermost layer path hidden variable variational probability of the hidden variable, an optimum model selection processing unit (the optimum model selection processing unit 208, for example) for, when an optimization reference based on the parameters optimized by the model parameter optimization processing unit is larger than a currently-set optimization reference, setting a model indicated by a marginalized log likelihood function based on the parameters as an optimum model, and a model estimation result output device (the model estimation result output device 209, for example) for outputting a model estimation result including a constrained hidden variable variational probability and parameters in the optimum model, wherein when a non-optimized candidate of the hierarchical hidden structure is present, the hierarchical hidden structure setting unit sets the non-optimized candidate of the hierarchical hidden structure as a hierarchical hidden structure to be calculated, the initialization processing unit re-initializes, the hidden variable variational probability calculation processing unit recalculates a path hidden variable variational probability, the model parameter optimization processing unit re-optimizes the parameters and the observation probability type of each component in the hidden variable model, and the optimality determination processing unit determines whether an optimization reference as a lower bound of the marginalized log likelihood function is converged.

(7) A computer readable non-transitory information storage medium for storing a model estimation program for performing the method of, when executed in an information processing device, acquiring parameters of a hidden variable model and calculating a constrained hidden variable variational probability as a hidden variable posterior probability close to a previously-given distribution by use of the parameters, optimizing the parameters of the hidden variable model by use of the constrained hidden variable variational probability, determining whether a marginalized log likelihood function using the optimized parameters is converged, when it is determined that the marginalized log likelihood function is not converged, recalculating a constrained hidden variable variational probability by use of the optimized parameters, re-optimizing the parameters of the hidden variable model by use of the calculated constrained hidden variable variational probability, and when it is determined that the marginalized log likelihood function is converged, outputting the constrained hidden variable variational probability and the parameters used for the marginalized log likelihood function.

The present invention has been described above with reference to the exemplary embodiments and the example, but the present invention is not limited to the exemplary embodiments and the example. The structure and details of the present invention can be variously changed within the scope of the present invention understandable to those skilled in the art.

The present application claims the priority based on U.S. Patent Application No. 61/900, 085 filed on November 5, 2013, the disclosure of which is all incorporated herein by reference.

Industrial Applicability

The present invention is applicable to data analysis of power demand and the like by use of multivariate data.

Reference Signs List

 100, 200 Model estimation device
 101, 201 Data input device
 102 Hidden state number setting unit
 103, 203 Initialization processing unit
 104. 204 Hidden variable variational probability calculation processing unit
 105. 205 Model parameter optimization processing unit
 106 Optimality determination processing unit
 107 Optimum model selection processing unit
 108 Model estimation result output device
 202 Hierarchical hidden structure setting unit
 206 Gate function optimization processing unit
 207 Optimality determination processing unit
 208 Optimum model selection processing unit
 209 Model estimation result output device

**Claims**

1. A model estimation device comprising:

 a hidden variable variational probability calculation processing unit which acquires parameters of a hidden variable model and calculating a constrained hidden variable variational probability as a hidden variable posterior probability close to a previously-given distribution by use of the parameters;
 a model parameter optimization processing unit which optimizes the parameters of the hidden variable model by use of the constrained hidden variable variational probability; and
 an optimality determination processing unit which determines whether a marginalized log likelihood function using the optimized parameters is converged,

 wherein when it is determined that the marginalized log likelihood function is not converged,
 the hidden variable variational probability calculation processing unit recalculates a constrained hidden variable variational probability by use of the optimized parameters,
 the model parameter optimization processing unit re-optimizes the parameters of the hidden variable model by use of the calculated constrained hidden variable variational probability, and
 when it is determined that the marginalized log likelihood function is converged, the constrained hidden variable variational probability and the parameters used for the marginalized log likelihood function are output.

2. The model estimation device according to claim 1,
wherein the hidden variable variational probability calculation processing unit includes:

 a variational problem solution space calculation processing unit which calculates a presence range of a constrained hidden variable variational probability for increasing a lower bound of a marginalized log likelihood function; and
 a constrained variational problem calculation processing unit which calculates a constrained hidden variable variational probability close to a previously-given distribution from the presence range.

3. The model estimation device according to claim 1 or claim 2, comprising:

a data input device which acquires candidates of the number of hidden states in a hidden variable model, and parameters of the hidden variable;

a hidden state number setting unit which selects and sets the number of hidden states from among the acquired candidates of the number of hidden states;

an initialization processing unit which initializes the parameters and a constrained hidden variable variational probability;

an optimum model selection processing unit which, when a marginalized log likelihood function based on the parameters optimized by the model parameter optimization processing unit is larger than a currently-set marginalized log likelihood function, sets a model indicated by the larger marginalized log likelihood function as an optimum model; and

a model estimation result output device which outputs a model estimation result including a constrained hidden variable variational probability and parameters of the optimum model,

wherein when a non-optimized candidate of the number of hidden states is present,

the hidden state number setting unit sets the non-optimized candidate of the number of hidden states as the number of hidden states,

the initialization processing unit re-initializes the parameters and the constrained hidden variable variational probability,

the hidden variable variational probability calculation processing unit recalculates a constrained hidden variable variational probability,

the model parameter optimization processing unit re-optimizes the parameters of the hidden variable model, and

the optimality determination processing unit re-determines whether the marginalized log likelihood function is converged.

4. The model estimation device according to claim 1, comprising:

a gate function optimization processing unit which optimizes parameters of a branch node in a hierarchical hidden structure expressing a hidden variable and having a plurality of hierarchies,

wherein the hidden variable variational probability calculation processing unit calculates a path hidden variable variational probability as a path hidden variable posterior probability indicating a correspondence between an observation variable and a component configuring a hidden variable model per hierarchy

the model parameter optimization processing unit acquires an observation probability type of the hidden variable model, and optimizes the parameters and the observation probability type of each component in the hidden variable model, and

the optimality determination processing unit determines whether an optimization reference as a lower bound of a marginalized log likelihood function using the optimized parameters and the observation probability type is converged.

5. The model estimation device according to claim 4,
wherein the hidden variable variational probability calculation processing unit includes:

a variational problem solution space calculation processing unit which calculates a presence range of a lowermost layer path hidden variable variational probability for increasing an optimization reference;

a constrained lowermost layer path hidden variable variational probability calculation processing unit which assumes a closest probability to a previously-given distribution from among the presence range of the lowermost layer path hidden variable variational probability as an updated value of the lowermost layer path hidden variable variational probability;

a hierarchy setting unit which sets one layer above a immediately-previous layer to be calculate as a layer to be calculated;

an upper layer path hidden variable variational probability calculation processing unit which takes a sum of the lowermost layer constrained hidden variable variational probabilities that the layer has a same branch nodes as a parent node and the layer is in a current layer to be calculated, and assumes the sum as a path hidden variable variational probability in one layer above; and

a hierarchical calculation end determination processing unit which confirms whether there is a layer for which the path hidden variable variational probability is not completely calculated, and confirms whether to terminate the calculation.

6. The model estimation device according to claim 4 or claim 5, wherein the gate function optimization processing unit includes:

a branch node information acquisition unit which acquires information on branch nodes in a hidden variable model of optimized parameters;
a branch node selection processing unit which selects a branch node to be optimized from among the acquired branch nodes;
a branch parameter optimization processing unit which optimizes a branch parameter in the selected branch node by use of a path hidden variable variational probability calculated by the hidden variable variational probability calculation processing unit; and
an all-branch node optimization end determination processing unit which determines whether all the acquired branch nodes are optimized.

7. The model estimation device according to any one of claim 4 to claim 6, comprising:

a data input device which acquires parameters of a hidden variable model including candidates of a hierarchical hidden structure indicating a hidden variable, an observation probability type, and candidates of the number of components;
a hierarchical hidden structure setting unit which selects and sets one candidate of the candidates of the hierarchical hidden structure;
an initialization processing unit which initializes the observation probability type, parameters of the observation probability a hidden variable, and a lowermost layer path hidden variable variational probability of the hidden variable;
an optimum model selection processing unit which, when an optimization reference based on the parameters optimized by the model parameter optimization processing unit is larger than a currently-set optimization reference, sets a model indicated by a marginalized log likelihood function based on the parameters optimized by the model parameter optimization processing unit as an optimum model; and
a model estimation result output device which outputs a model estimation result including a constrained hidden variable variational probability and parameters in the optimum model,

wherein when a non-optimized candidate of the hierarchical hidden structure is present,
the hierarchical hidden structure setting unit sets the non-optimized candidate of the hierarchical hidden structure as a hierarchical hidden structure to be calculated,
the initialization processing unit re-initializes,
the hidden variable variational probability calculation processing unit recalculates a path hidden variable variational probability,
the model parameter optimization processing unit re-optimizes the parameters of each component and the observation probability type in the hidden variable model, and
the optimality determination processing unit determines whether an optimization reference as a lower bound of the marginalized log likelihood function is converged.

8. A model estimation method comprising:

acquiring parameters of a hidden variable model and calculating a constrained hidden variable variational probability as a hidden variable posterior probability close to a previously-given distribution by use of the parameters;
optimizing the parameters of the hidden variable model by use of the constrained hidden variable variational probability;
determining whether a marginalized log likelihood function using the optimized parameters is converged,
when it is determined that the marginalized log likelihood function is not converged,
recalculating a constrained hidden variable variational probability by use of the optimized parameters,
re-optimizing the parameters of the hidden variable model by use of the calculated constrained hidden variable variational probability, and
when it is determined that the marginalized log likelihood function is converged, outputting the constrained hidden variable variational probability and the parameters used for the marginalized log likelihood function.

9.  A model estimation program for causing a computer to perform:

a hidden variable variational probability calculation processing of acquiring parameters of a hidden variable model and calculating a constrained hidden variable variational probability as a hidden variable posterior probability close to a previously-given distribution by use of the parameters;
a model parameter optimization processing of optimizing the parameters of the hidden variable model by use of the constrained hidden variable variational probability;
an optimality determination processing of determining whether a marginalized log likelihood function using the optimized parameters is converged,

when it is determined that the marginalized log likelihood function is not converged,
the hidden variable variational probability calculation processing of recalculating a constrained hidden variable variational probability by use of the optimized parameters,
the model parameter optimization processing of re-optimizing the parameters of the hidden variable model by use of the calculated constrained hidden variable variational probability, and
when it is determined that the marginalized log likelihood function is converged, outputting the constrained hidden variable variational probability and the parameters used for the marginalized log likelihood function.

# FIG. 1

INPUT DATA 111

MODEL ESTIMATION DEVICE 100

```
┌─────────────────────┐ 101
│  DATA INPUT DEVICE  │
└─────────────────────┘

┌─────────────────────┐ 102
│   HIDDEN STATE      │
│     NUMBER          │
│   SETTING UNIT      │
└─────────────────────┘

┌─────────────────────┐ 103
│   INITIALIZATION    │
│   PROCESSING UNIT   │
└─────────────────────┘
```

```
┌─────────────────────┐ 104
│  HIDDEN VARIABLE    │
│   VARIATIONAL       │
│   PROBABILITY       │
│   CALCULATION       │
│  PROCESSING UNIT    │
└─────────────────────┘

┌─────────────────────┐ 106
│    OPTIMALITY       │
│  DETERMINATION      │
│  PROCESSING UNIT    │
└─────────────────────┘

┌─────────────────────┐ 107
│  OPTIMUM MODEL      │
│    SELECTION        │
│  PROCESSING UNIT    │
└─────────────────────┘

┌─────────────────────┐ 108
│  MODEL ESTIMATION   │
│      RESULT         │
│   OUTPUT DEVICE     │
└─────────────────────┘
```

```
┌─────────────────────┐ 105
│  MODEL PARAMETER    │
│    OPTIMIZATION     │
│  PROCESSING UNIT    │
└─────────────────────┘
```

MODEL ESTIMATION RESULT 112

# FIG. 2

INPUT DATA 111
ESTIMATION MODEL 104-3

HIDDEN VARIABLE VARIATIONAL
PROBABILITY CALCULATION
PROCESSING UNIT 104

104-1

VARIATIONAL PROBLEM
SOLUTION SPACE
CALCULATION
PROCESSING UNIT

104-2

CONSTRAINED
VARIATIONAL PROBLEM
CALCULATION
PROCESSING UNIT

CONSTRAINED HIDDEN VARIABLE
VARIATIONAL PROBABILITY 104-4

# FIG. 3

```
                    START

              INPUT DATA              ～S100

         SET HIDDEN STATE NUMBER      ～S101

    PERFORM INITIALIZATION PROCESSING ～S102

      CALCULATE CONSTRAINED HIDDEN    ～S103
      VARIABLE VARIATIONAL PROBABILITY

        OPTIMIZE MODEL PARAMETER      ～S104

         DETERMINE OPTIMALITY         ～S105

    NO          OPTIMUM?

                   YES

         SELECT OPTIMAL MODEL         ～S106

    YES       IS CANDIDATE            ～S107
          OF HIDDEN STATE NUMBER
                 LEFT?

                   NO

    OUTPUT MODEL ESTIMATION RESULT    ～S108

                    END
```

# FIG. 4

START

CALCULATE VARIATIONAL PROBLEM
SOLUTION SPACE — S111

CALCULATE CONSTRAINED HIDDEN
VARIABLE VARIATIONAL PROBABILITY — S112

END

# FIG. 5

INPUT DATA 211

MODEL ESTIMATION DEVICE 200

201
DATA INPUT DEVICE

202
HIERARCHICAL HIDDEN STRUCTURE SETTING UNIT

203
INITIALIZATION PROCESSING UNIT

204
HIDDEN VARIABLE VARIATIONAL PROBABILITY CALCULATION PROCESSING UNIT

205
MODEL PARAMETER OPTIMIZATION PROCESSING UNIT

207
OPTIMALITY DETERMINATION PROCESSING UNIT

206
GATE FUNCTION OPTIMIZATION PROCESSING UNIT

208
OPTIMUM MODEL SELECTION PROCESSING UNIT

209
MODEL ESTIMATION RESULT OUTPUT DEVICE

MODEL ESTIMATION RESULT 212

23

# FIG. 6

INPUT DATA 211
ESTIMATION MODEL 204-6

HIDDEN VARIABLE VARIATIONAL
PROBABILITY CALCULATION
PROCESSING UNIT 204

204-1
VARIATIONAL PROBLEM
SOLUTION SPACE
CALCULATION
PROCESSING UNIT

204-2
CONSTRAINED
LOWERMOST LAYER
PATH HIDDEN VARIABLE
VARIATIONAL PROBABILITY
CALCULATION
PROCESSING UNIT

204-3
HIERARCHY SETTING UNIT

204-4
UPPER LAYER PATH HIDDEN
VARIABLE VARIATIONAL
PROBABILITY CALCULATION
PROCESSING UNIT

204-5
HIERARCHICAL
CALCULATION
END DETERMINATION
PROCESSING UNIT

HIERARCHICAL HIDDEN VARIABLE
VARIATIONAL PROBABILITY 204-7

24

# FIG. 7

ESTIMATION MODEL 204-6

INPUT DATA 211
HIERARCHICAL
HIDDEN VARIABLE
VARIATIONAL
PROBABILITY 204-7

GATE FUNCTION
OPTIMIZATION
PROCESSING UNIT 206

206-1

BRANCH NODE
INFORMATION
ACQUISITION UNIT

206-2

BRANCH NODE
SELECTION
PROCESSING UNIT

206-3

BRANCH PARAMETER
OPTIMIZATION
PROCESSING UNIT

206-4

ALL-BRANCH NODE
OPTIMIZATION
END DETERMINATION
PROCESSING UNIT

GATE FUNCTION MODEL 206-6

# FIG. 8

```
        ( START )
            │
            ▼
┌──────────────────────────────┐
│         INPUT DATA           │──── S200
└──────────────────────────────┘
            │
            ▼
┌──────────────────────────────┐
│ SET HIERARCHICAL HIDDEN STRUCTURE │──── S201
└──────────────────────────────┘
            │
            ▼
┌──────────────────────────────┐
│ PERFORM INITIALIZATION PROCESSING │──── S202
└──────────────────────────────┘
            │
            ▼
┌──────────────────────────────┐
│   CALCULATE CONSTRAINED HIDDEN   │──── S203
│ VARIABLE VARIATIONAL PROBABILITY │
└──────────────────────────────┘
            │
            ▼
┌──────────────────────────────┐
│     OPTIMIZE EACH COMPONENT      │──── S204
└──────────────────────────────┘
            │
            ▼
┌──────────────────────────────┐
│   OPTIMIZE EACH GATE FUNCTION    │──── S205
└──────────────────────────────┘
            │
            ▼
┌──────────────────────────────┐
│      DETERMINE OPTIMALITY        │──── S206
└──────────────────────────────┘
            │
            ▼
NO      < OPTIMUM? >
            │ YES
            ▼
┌──────────────────────────────┐
│      SELECT OPTIMAL MODEL        │──── S207
└──────────────────────────────┘
            │
            ▼
YES   < IS CANDIDATE              > S208
      < OF HIERARCHICAL HIDDEN    >
      < STRUCTURE LEFT?           >
            │ NO
            ▼
┌──────────────────────────────┐
│  OUTPUT MODEL ESTIMATION RESULT  │──── S209
└──────────────────────────────┘
            │
            ▼
         ( END )
```

# FIG. 9

START

CALCULATE VARIATIONAL PROBLEM SOLUTION SPACE ——S211

CALCULATE LOWERMOST LAYER PATH HIDDEN VARIABLE VARIATIONAL PROBABILITY ——S212

SET HIERARCHY ——S213

CALCULATE UPPER LAYER PATH HIDDEN VARIABLE VARIATIONAL PROBABILITY ——S214

S215 CALCULATED FOR ALL HIERARCHIES?

NO

YES

END

# FIG. 10

START

GRASP ALL BRANCH NODES — S221

SELECT ONE BRANCH NODE — S222

OPTIMIZE BRANCH PARAMETER — S223

S224

NO ← OPTIMIZED FOR ALL BRANCH NODES?

YES

END

# FIG. 11

MODEL ESTIMATION DEVICE100

104
HIDDEN VARIABLE VARIATIONAL PROBABILITY CALCULATION PROCESSING UNIT

105
MODEL PARAMETER OPTIMIZATION PROCESSING UNIT

106
OPTIMALITY DETERMINATION PROCESSING UNIT

# EP 3 067 837 A1

## INTERNATIONAL SEARCH REPORT

International application No.

PCT/JP2014/004997

### A. CLASSIFICATION OF SUBJECT MATTER
*G06N5/04(2006.01)i*

According to International Patent Classification (IPC) or to both national classification and IPC

### B. FIELDS SEARCHED

Minimum documentation searched (classification system followed by classification symbols)
G06N5/04

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | Takatoshi JITSUHIRO et al., "The Succesive State Splitting Algorithm based on the Variational Bayesian Approach", IPSJ SIG Notes, 19 December 2003 (19.12.2003), vol.2003, no.124, pages 43 to 48, particularly, '3.4 Jigo Bunpu' | 1-9 |
| A | Hayaru SHONO et al., "A latent variational approximation method of Total variation for noise reduction", IEICE Technical Report, 19 December 2003 (19.12.2003), vol.111, no.275, pages 217 to 222, particularly, '2.4 EM-ho ni yoru Hyper Parameter Suitei' | 1-9 |
| A | WO 2011/108632 A1 (NEC Corp.), 09 September 2011 (09.09.2011), entire text; all drawings & US 2012/0323834 A1 | 1-9 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 November, 2014 (18.11.14) | 02 December, 2014 (02.12.14) |

| Name and mailing address of the ISA/ Japanese Patent Office | Authorized officer |
|---|---|
| Facsimile No. | Telephone No. |

Form PCT/ISA/210 (second sheet) (July 2009)

**EP 3 067 837 A1**

<table>
<tr><td colspan="2" style="text-align:center">**INTERNATIONAL SEARCH REPORT**</td><td>International application No.<br>PCT/JP2014/004997</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/128207 A1 (NEC Corp.),<br>27 September 2012 (27.09.2012),<br>entire text; all drawings<br>& US 2013/0211801 A1 & EP 2687994 A1 | 1-9 |
| A | Kenji FUJIMOTO et al., "Jotai Kukan Model no Hanbun Bayes Suitei", Current advances in materials and processes CAMP-ISIJ Dai 156 Kai Shuki Koen Taikai, vol.21, no.2 [CD-ROM], The Iron and Steel Institute of Japan, 01 September 2008 (01.09.2008), pages 1118, 1121 | 1-9 |

Form PCT/ISA/210 (continuation of second sheet) (July 2009)

31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61900085 A

**Non-patent literature cited in the description**

- **C. BISHOP. ; SVENSKN M.** Bayesian hierarchical mixtures of experts. *Proceedings of the Nineteenth conference on Uncertainty in Artificial Intelligence,* 2002, 57-64
- A view of the EM algorithm that justifies incremental, sparse, and other variants. **NEAL, RADFORD M. ; GEOFFREY E. HINTON.** Learning in graphical models. Springer, 1998, 355-368
- variational Algorithms for Approximate Bayesian Inference. **BEAL, M. J.** PhD thesis. University College, 2003, 44-81
- **RYOHEI FUJIMAKI ; SATOSHI MORINAGA.** *Factorized Asymptotic Bayesian Inference for Mixture Modeling. Proceedings of the fifteenth international conference on Artificial Intelligence and Statistics (AISTATS),* 2012